# EUROPEAN PATENT APPLICATION

(11) **EP 1 503 546 A2**
(43) Date of publication of application: **02.02.2005**
(21) Application number: 04003272.4
(22) Date of filing: 13.02.2004
(51) Int. Cl.: H04L 12/42, H04L 29/08

(54) **Data transmission method, data transmission system, and data transmission apparatus**

(30) Priority: 29.07.2003 JP 2003282110
(71) Applicant: MATSUSHITA ELECTRIC INDUSTRIAL CO., LTD., Kadoma-shi, Osaka 571-8501 (JP)
(72) Inventor: Umei, Toshitomo, Settsu-shi, Osaka-fu 566-0033 (JP); Katta, Noboru, Itami-shi, Hyogo-ken, 664-0017 (JP); Mizuguchi, Yuji, Hirakata-shi, Osaka-fu, 573-0165 (JP); Akita, Takashi, Osaka-shi, Osaka-fu, 532-0022 (JP)
(74) Representative: Balsters, Robert

(57) **Abstract**

In a physical layer of each data transmission apparatus (1), a physical layer initialization process is performed in response to a reset exit process performed by their respective CPUs (4). Then, in a link layer of a master data transmission apparatus (1) and in a link layer of a data transmission apparatus (1) which operates in a normal mode, after the completion of the physical layer initialization process, a link layer initialization process is performed in response to a reset exit process performed by their respective CPUs (4), and then the data transmission apparatuses (1) start data communication using their respective physical layers and link layers. On the other hand, a link layer of a data transmission apparatus (1) which operates in a bypass mode maintains its reset state, and the data transmission apparatus (1) transmits data using only its own physical layer by bypassing its own link layer.

## Description

### BACKGROUND OF THE INVENTION

### Field of the Invention

The present invention relates to a data transmission method, a data transmission system, and a data transmission apparatus. More particularly, the present invention relates to a data transmission method for data transmission apparatuses interconnected via transmission paths in a ring configuration, for example, a data transmission system implementing such a method, and a data transmission apparatus.

### Description of the Background Art

Transmission of Internet information or image information within an automobile or the like, as applied in car navigation or ITS (Intelligent Transport Systems) technology in recent years, requires large data transfers and fast communications. Communication methods for transmitting such digitized image and/or voice data, or digital data (e.g., computer data), are being studied vigorously. There already exists practical implementations of networks for use in digital data transmission within an automobile or the like. Such an on-vehicle network adopts a ring topology as its physical topology. Specifically, a plurality of nodes are connected in a ring topology forming a unidirectional ring-type LAN which interconnects audio devices, navigation devices, information terminal devices, security devices, and the like in a unified manner. One example of an information communication protocol used in a ring-type LAN is MOST (Media Oriented Systems Transport). MOST not only defines a communication protocol but also refers to manners of constructing distributed systems. The data on a MOST network is transmitted on a frame-by-frame basis, such that frames are transmitted sequentially from node to node in one direction.

In the case of a ring-type LAN provided inside an automobile, for example, the radiation noise from the LAN may cause malfunctioning of other electronic devices mounted in the automobile. On the other hand, radiation noise from such other devices should not hinder proper transmission. Therefore, in a conventional ring-type LAN which employs MOST, the nodes are typically interconnected via fiber-optic cables for optical communication so as to improve noise immunity while preventing electromagnetic waves from being generated. However, inexpensive cables, such as twisted pair cables or coaxial cables, may also be used to perform electrical communication; there have been implementations of this technique (for example, a data transmission system disclosed in International Publication No. WO 02/30079) which realize a fast data transmission rate exceeding 20 Mbps while reducing radiation noise and improving noise immunity.

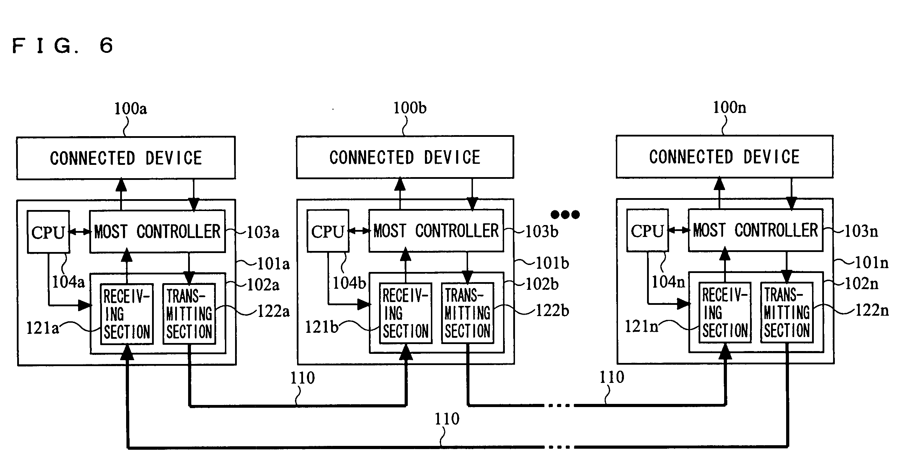

With reference to FIG. 6, a conventional data transmission system using electrical communication is described. FIG. 6 is a block diagram illustrating a configuration of the data transmission system.

In FIG. 6, the data transmission system includes data transmission apparatuses 101a to 101n of n stages, in which each node performs data transmission and reception. The data transmission apparatuses 101a to 101n are interconnected with each other in a ring configuration via transmission paths 110 which consist of coaxial cables or twisted pair cables. Devices 100a to 100n are connected to the data transmission apparatuses 101a to 101n, respectively. The connected devices 100a to 100n perform processing in accordance with data outputted from the data transmission apparatuses 101a to 101n and output the results thereof to their respective data transmission apparatuses 101a to 101n. The data transmission apparatus 101a acts as a master that sends data according to its own clock, while the data transmission apparatuses 101b to 101n act as slaves that establish clock synchronization by means of a lock signal for establishing clock synchronization to be received from the master. The data transmission apparatuses 101a to 101n have substantially the same configuration. As a representative example, first, the configuration of the master data transmission apparatus 101a and the flow of transmission/reception data therein will be described.

The data transmission apparatus 101a includes a transmitting/receiving section (physical layer) 102a, a MOST controller (link layer) 103a, and a CPU 104a. The transmitting/receiving section 102a has a receiving section 121a and a transmitting section 122a.

The data transmission apparatus 101a outputs data to the data transmission apparatus 101b through a transmission path 110 and receives data from the data transmission apparatus 101n. The data from the connected device 100a which is connected to the data transmission apparatus 101a is processed in the MOST controller 103a and outputted as a digital data string. The transmitting section 122a sets a predetermined bit of the digital data string as a data symbol, and then the data symbols are subjected to a mapping process in accordance with a conversion table and a filtering process. A digital signal processed in the transmitting section 122a is converted to an analog signal, and then the analog signal is outputted to the transmission path 110. The analog signal is outputted in a waveform with a predetermined period such that the digital data string is mapped to any of a plurality of signal levels. Meanwhile, the receiving section 121a of the data transmission apparatus 101a receives an analog signal outputted from the data transmission apparatus 101n through the transmission path 110 and converts the analog signal to a digital signal. The receiving section 121a decodes the digital signal into data symbols by subjecting the digital signal to filtering and reverse mapping processes, converts the data symbols into a digital data string, and then outputs the digital data string to the MOST controller 103a.

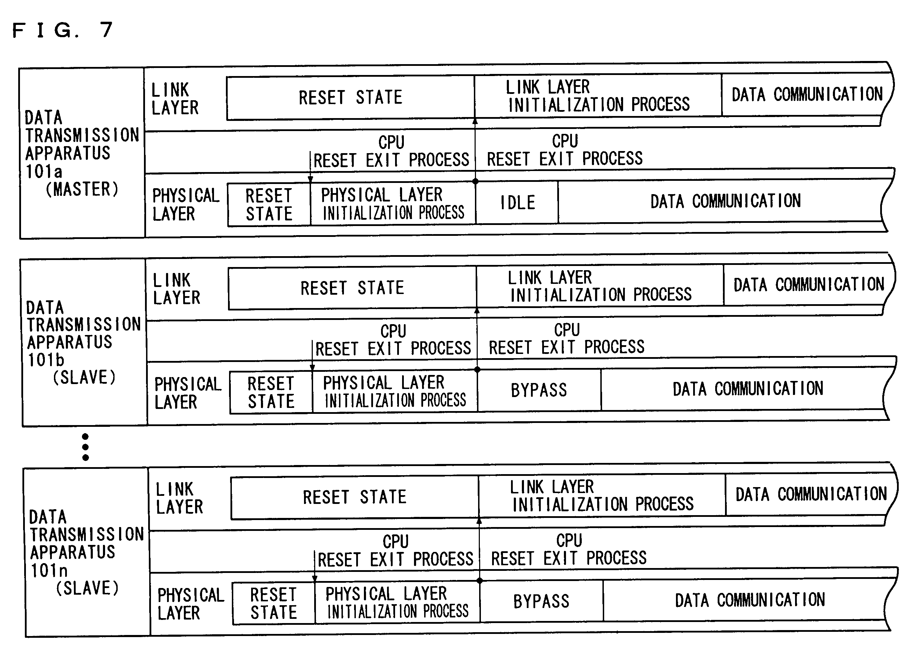

In a data transmission system having the above configuration, in order to define mechanical connections, an initialization process is performed on the MOST controllers 103a to 103n which serve as the link layer of the protocol and on the transmitting/receiving sections 102a to 102n which serve as the physical layer of the protocol. During the initialization operation, the establishment of clock synchronization and the setting of evaluation levels, which serve as the reference for data evaluation, are performed on each of the data transmission apparatuses 101a to 101n. With reference to FIGS. 6 and 7, the initialization process performed in the above-described data transmission system is described below. FIG. 7 is a sequence diagram showing an initialization process for the data transmission apparatuses 101a to 101n in the data transmission system.

In the data transmission system, the MOST controllers 103a to 103n, serving as the link layer of the data transmission apparatuses 101a to 101n, and the transmitting/receiving sections 102a to 102n, serving as the physical layer, are all in a reset state at the time before an initialization operation is performed. First, the CPUs 104 to 104n of the data transmission apparatuses 101a to 101n each cause the transmitting/receiving sections 102a to 102n to exit the reset state at the time, for example, when the system is turned on. After the reset state is exited, the transmitting/receiving section 102a performs an initialization process on itself (i.e., the physical layer). During this initialization process, in order to define mechanical connections, an initialization process is also performed on the transmitting/receiving sections 102b to 102n which are other physical layers of the protocol.

First, the master transmitting/receiving section 102a sends a lock signal to the transmission path 110 in accordance with an output frequency obtained using the reference frequency of its own oscillator. The lock signal is, for example, a sine wave signal which is based on a clock frequency of the master data transmission apparatus 101a.

The slave transmitting/receiving section 102b receives the lock signal through the transmission path 110, performs clock recovery, and sets a reception PLL. The transmitting/receiving section 102b then sends the lock signal to a transmission path 110 in accordance with a recovered clock of the reception PLL. Likewise, the other, slave transmitting/receiving sections 102c to 102n receive a lock signal sent out from their respective upstream data transmission apparatuses, perform clock recovery, set a reception PLL, and then send the lock signal to their respective downstream data transmission apparatuses in accordance with a recovered clock of the reception PLL. The master transmitting/receiving section 102a receives a lock signal sent from the transmitting/receiving section 102n of an immediately upstream data transmission apparatus, performs clock recovery, and sets a reception PLL.

The master transmitting/receiving section 102a generates therein a training signal for setting evaluation levels which serve as the reference for data evaluation with respect to the slave transmitting/receiving section 102b provided immediately downstream thereof, and sends the training signal to the transmission path 110. The training signal includes, for example, a clock recovery sine wave in which the maximum and minimum amplitude levels appear alternately; a training pattern header in which, for example, the maximum or minimum amplitude level is maintained for a predetermined period of time; and a training pattern which is a known data pattern between the data transmission apparatuses 101. The training pattern uses, for example, a PN pattern signal which contains all of the above-described data symbol values in various patterns.

The slave transmitting/receiving section 102b receives the training signal through the transmission path 110, immediately generates a training signal for the data transmission apparatus 101c immediately downstream thereof, and sends the training signal to the transmission path 110. The transmitting/receiving section 102b sets, in its own receiving section 121b, evaluation levels to be used as thresholds in evaluating a transmission level of each symbol value, using the received training signal, and then sets evaluation values based on the evaluation levels which serve as boundaries. Likewise, the other, slave transmitting/receiving sections 102c to 102n receive training signals sent out from their respective upstream data transmission apparatuses 101 and then immediately send their respective training signals to their respective downstream data transmission apparatuses 101. Then, the other, slave transmitting/receiving sections 102c to 102n set, in the receiving sections 121c to 121n thereof, evaluation levels to be used as thresholds in evaluating a transmission level of each symbol value, using the training signals received from their respective upstream data transmission apparatuses 101, and then sets evaluation values based on the evaluation levels which serve as boundaries. The master transmitting/receiving section 102a also sets evaluation levels to be used as thresholds in evaluating a transmission level of each symbol value, using the training signal received from the transmitting/receiving section 102n, and then sets evaluation values based on the evaluation levels which serve as boundaries. By these operations, the physical layer initialization process of the data transmission system is completed, whereby the physical layers can perform data communication therebetween.

After the completion of the physical layer initialization process of the entire system, the CPUs 104a to 104n cause the MOST controllers 103a to 103n, respectively, to exit the reset state. Subsequently, the MOST controllers 103a to 103n start an operation in accordance with a predetermined reference frequency, and then start an initialization process thereof (i.e., the link layer).

During the link layer initialization process, the establishment of synchronization of the link and physical layers of each data transmission apparatus and the establishment of frame synchronization between the master link layer and the slave link layer are performed, and the master MOST controller 103a confirms the establishment of a network of the whole data transmission system. First, the master MOST controller 103a (link layer) outputs to the transmitting section 122a initialization data for performing an initialization process (e.g., frame synchronization with another link layer). With the use of the initialization data, synchronization between the MOST controller 103a and the transmitting section 122a is established and a PLL of the MOST controller 103a is locked. Then, the initialization data is outputted to the transmission path 110 from the transmitting section 122a.

The slave receiving section 121b receives the initialization data through the transmission path 110 and outputs it to the MOST controller 103b. The MOST controller 103b establishes frame synchronization with the master MOST controller 103a using the inputted initialization data, and outputs the initialization data to the transmitting section 122b. With the use of the initialization data, synchronization between the MOST controller 103b and the transmitting section 122b is established and a PLL of the MOST controller 103b is locked. Then, the initialization data is outputted to the transmission path 110 from the transmitting section 122b. Note that until the PLL of the MOST controller 103b has been locked, the initialization data received by the receiving section 121b is outputted from the transmitting section 122b after bypassing the MOST controller 103b. After the synchronization between the MOST controller 103b and the transmitting section 122b has been established, all the data received by the receiving section 121b is outputted to the MOST controller 103b.

Likewise, the other, slave MOST controllers 103c to 103n establish frame synchronization with the master MOST controller 103a using inputted initialization data and output the initialization data to the transmitting sections 122c to 122n, respectively. The master MOST controller 103a receives the initialization data a predetermined number of times via the transmitting/receiving section 102a (physical layer), and thereby confirms the establishment of a network. Then, the MOST controller 103a sends the result of establishment confirmation to other link layers and completes the link layer initialization process. After these initialization processes of the physical and link layers, the data transmission apparatuses 101a to 101n start data communication therebetween.

In the above-described conventional data transmission system, after the initialization processes of the physical and link layers, all data is transmitted via each MOST controller. Specifically, all of the transmitting/receiving sections (the physical layer) 102a to 102n, MOST controllers (the link layer) 103a to 103n, and CPUs (the control section) 104a to 104n of the data transmission apparatuses 101a to 101n need to be kept in an operational state at all times, causing an increase in power consumption of the entire data transmission system. In general, when the MOST controllers 103a to 103n are kept in an operational state at all times, their respective connected devices 100a to 100n are also kept in a power-on state, and accordingly the power consumption further increases.

In an automobile, a battery is typically used as the power source, and during engine operation the power generated by an alternator provided in the engine is stored. During engine-off conditions, the battery is the only power source in the automobile, and thus the amount of power that can be used is limited. Therefore, in the case where the above-described data transmission system is provided in an automobile, because the system operates using the battery as its power source, the power consumption of the data transmission system needs to be kept to the lowest possible level, especially during engine-off conditions. However, in the case, for example, where only some devices (e.g., a surveillance camera, a security system, etc.) connected to the data transmission system need to operate during engine-off conditions, hardware in the data transmission system unrelated to such connected devices all needs to be kept in an operational state, and therefore the power consumption increases dramatically.

### SUMMARY OF THE INVENTION

Therefore, an object of the present invention is to provide a data transmission method, a data transmission system, and a data transmission apparatus, with which the power consumption of the entire system is reduced when only some connected devices which are connected to the data transmission system need to operate.

The present invention has the following features to attain the object mentioned above. It is to be understood that reference numerals, etc., in parentheses are provided, for the purpose of assisting in the understanding of the present invention and showing the corresponding relationship with an embodiment, as will be described later, and thus are not intended to limit the scope of the present invention.

A data transmission method of the present invention transmits and receives a transmission signal (electrical signal) between a plurality of data transmission apparatuses (1a to 1n) interconnected via transmission paths (11) in a ring configuration, the transmission signal being based on data (digital data) processed according to a predetermined communication protocol (MOST). A first data transmission apparatus (a data transmission apparatus 1 operating in a bypass mode), which is at least one of the plurality of data transmission apparatuses, generates, in a physical layer (transmitting/receiving section 2), reception data (a bypass digital data string BX) in response to a transmission signal outputted from an immediately upstream data transmission apparatus, generates a transmission signal based on the reception data, and outputs the transmission signal to an immediately downstream data transmission apparatus (a data transmission apparatus 1 which performs an operation of steps S78; hereinafter only the step number is provided). A second data transmission apparatus (a data transmission apparatus 1 operating in a normal mode), which is the rest of the plurality of data transmission apparatuses other than the first data transmission apparatus, generates, in a physical layer thereof, reception data (reception digital data string RX) in response to a transmission signal outputted from an immediately upstream data transmission apparatus, and processes the reception data in a link layer (most controller 3) thereof according to the communication protocol. Then, the second data transmission apparatus processes transmission data (transmission digital data string TX) in the link layer according to the communication protocol, generates a transmission signal in the physical layer based on the transmission data, and outputs the transmission signal to an immediately downstream data transmission apparatus (S21 and S50).

In one example, the aforementioned first data transmission apparatus may transmit and receive the transmission signal in accordance with an instruction from an outside (e.g., CPU 4) of its own physical layer, in a manner such that the reception data bypasses its own link layer. In another example, the first data transmission apparatus may transmit and receive the transmission signal by maintaining its own link layer in a reset state where a data process operation is suspended, so that the reception data (bypass digital data string BX) bypasses the link layer (S77). For example, at the time of initialization (S16, S45, S75, S19, and S48) for allowing the plurality of data transmission apparatuses in which both of the link layer and the physical layer are in the reset state (S12, S41, and S71) to perform transmission/reception of a transmission signal therebetween, the link layer and the physical layer of the second data transmission apparatus may be caused to exit the reset state (S15, S44, S18, and S47); and only the physical layer of the first data transmission apparatus may be caused to exit the reset state (S74).

The transmission signal may be generated in the physical layer by mapping symbols of the transmission data to any of a plurality (8 values) of signal levels. In this case, the reception data may be generated in the physical layer based on evaluation levels for distinguishing and evaluating each signal level of the transmission signal.

Specifically, the communication protocol may be defined by MOST.

A data transmission system of the present invention has a plurality of data transmission apparatuses interconnected with each other via transmission paths in a ring configuration, the data transmission apparatuses transmitting and receiving a transmission signal therebetween. The data transmission apparatuses each comprise a processing section (MOST controller 3) and a transmitting/receiving section (2). The processing section processes transmission/reception data (reception digital data string RX and transmission digital data string TX) according to a predetermined communication protocol. The transmitting/receiving section generates a transmission signal based on the transmission data processed in the processing section and outputs the transmission signal to an immediately downstream data transmission apparatus. In addition, the transmitting/receiving section generates reception data based on a transmission signal outputted from an immediately upstream data transmission apparatus and outputs the reception data to the processing section. A first data transmission apparatus, which is at least one of the plurality of data transmission apparatuses, generates reception data in the transmitting/receiving section based on a transmission signal outputted from an immediately upstream data transmission apparatus, generates a transmission signal based on the reception data (bypass digital data string BX), and outputs the transmission signal to an immediately downstream data transmission apparatus. A second data transmission apparatus, which is the rest of the plurality of data transmission apparatuses other than the first data transmission apparatus, generates reception data in the transmitting/receiving section in response to a transmission signal outputted from an immediately upstream data transmission apparatus, and processes the reception data in the processing section according to the communication protocol. Then, the second data transmission apparatus processes transmission data in the processing section according to the communication protocol, generates a transmission signal in the transmitting/receiving section based on transmission data, and outputs the transmission signal to an immediately downstream data transmission apparatus.

The transmitting/receiving section may comprise a bypass path (a path between evaluation processing section 215 and selector 221) and a selector (221). The bypass path outputs the reception data by bypassing its own processing section. The selector selects one of the transmission data and the reception data in accordance with an operating condition of the processing section and outputs selected data to a transmitting end (data mapping section 222) of the transmitting/receiving section, the transmission data being outputted from the processing section and the reception data being outputted through the bypass path. In this case, in one example, the selector of the first data transmission apparatus may select the reception data outputted through the bypass path, in accordance with an instruction from an outside (e.g., CPU 4) of its own transmitting/receiving section. In another example, the selector of the first data transmission apparatus may select the reception data outputted through the bypass path, when the processing section of the first data transmission apparatus is in a reset state where a data processing operation is suspended (i.e., when a synchronization detection signal CS is not inputted). The data transmission apparatuses each further may comprise a control section (CPU 4). The control section controls operations of its own processing section and its own transmitting/receiving section. In this case, the control section of the first data transmission apparatus may control the processing section of the first data transmission apparatus so as to maintain its reset state (S77). The data transmission system may further comprise transmission lines (12). The transmission lines communicably interconnect the control sections of the respective data transmission apparatuses. In this case, the control section of the first data transmission apparatus may control the processing section of the first data transmission apparatus so as to maintain its reset state, in accordance with an instruction (i.e., an instruction to inhibit exit from the reset state of the link layer) inputted through the transmission line.

The transmitting/receiving section may comprise a data mapping section (222) and an evaluation processing section (215). The data mapping section generates the transmission signal by mapping symbols of the transmission data to any of a plurality of signal levels. The evaluation processing section generates the reception data based on evaluation levels for distinguishing and evaluating each signal level of the transmission signal.

Specifically, the communication protocol used in the processing section may be defined by MOST.

A data transmission apparatus of the present invention is interconnected with other data transmission apparatuses via transmission paths in a ring configuration and performs transmission/reception of a transmission signal with the other data transmission apparatuses. The data transmission apparatus comprises a processing section and a transmitting/receiving section. The processing section processes transmission/reception data according to a predetermined communication protocol. The transmitting/receiving section generates a transmission signal based on transmission data processed in the processing section and outputs the transmission signal to another data transmission apparatus. In addition, the transmitting/receiving section generates reception data based on a transmission signal outputted from another data transmission apparatus and outputs the reception data to the processing section. In a first mode (bypass mode), the transmitting/receiving section generates reception data based on a transmission signal outputted from another data transmission apparatus, generates a transmission signal based on the reception data, and outputs the transmission signal to another data transmission apparatus. In a second mode (normal mode) different from the first mode, the transmitting/receiving section generates reception data in response to a transmission signal outputted from another data transmission apparatus and outputs the reception data to the processing section; the processing section processes the reception data outputted from the transmitting/receiving section, according to the communication protocol, and outputs to the transmitting/receiving section transmission data processed according to the communication protocol; and the transmitting/receiving section generates a transmission signal based on the transmission data outputted from the processing section and outputs the transmission signal to another data transmission apparatus.

The transmitting/receiving section may comprise a bypass path and a selector. The bypass path outputs the reception data by bypassing the processing section. The selector selects one of the transmission data and the reception data in accordance with an operating condition of the processing section and outputs selected data to a transmitting end of the transmitting/receiving section, the transmission data being outputted from the processing section and the reception data being outputted through the bypass path. In this case, in one example, the selector may select the reception data outputted through the bypass path, in accordance with an instruction indicating the first mode and received from an outside of the transmitting/receiving section. In another example, the selector may select the reception data, outputted through the bypass path, when, in the first mode, the processing section is in a reset state where a data processing operation is suspended. The data transmission apparatus may further comprise a control section for controlling operations of the processing section and the transmitting/receiving section. In this case, the control section may control, in the first mode, the processing section so as to maintain its reset state. The data transmission apparatus may further comprise a transmission line for communicably connecting the control section to another data transmission apparatus. In this case, the control section may control the processing section so as to maintain its reset state, in accordance with an instruction indicating the first mode and inputted through the transmission line.

The transmitting/receiving section may comprise a data mapping section and an evaluation processing section. The data mapping section generates the transmission signal by mapping symbols of the transmission data to any of a plurality of signal levels. The evaluation processing section generates the reception data based on evaluation levels for distinguishing and evaluating each signal level of the transmission signal.

Specifically, the communication protocol used in the processing section may be defined by MOST.

According to the data transmission method of the present invention, there are provided a first data transmission apparatus that transmits data using only its own physical layer; and a second data transmission apparatus that transmits data using its own link layer and its own physical layer. Thus, by setting a data transmission apparatus which does not requires an operation in the link layer as the first data transmission apparatus, the power consumption of the data transmission apparatus can be reduced. For example, in the case where among devices connected to a plurality of data transmission apparatuses, only certain devices need to operate, data transmission apparatuses having connected devices which do not need to operate are allowed to operate as the first transmission apparatus, whereby it is possible to significantly reduce the power consumption of the entire system.

In the case where the first data transmission apparatus transmits and receives the transmission signal in such a manner that the reception data bypasses its own link layer in accordance with an instruction from an outside of its own physical layer, data processing does not need to be performed in the link layer, and thus it is possible to reduce the power consumption in the link layer.

In the case where the link layer of the first data transmission apparatus is maintained in the reset state, the link layer does not perform data processing, and therefore the power consumption of the link layer can be reduced. In addition, generally, the supply of power to a connected device which is connected to the link layer in the reset state is also stopped, making it possible to significantly reduce the power consumption of the connected device connected to the first data transmission apparatus. Moreover, the first data transmission apparatus transmits and receives, when its own link layer is in a reset state, a transmission signal such that the transmission signal bypasses the link layer. Thus, by controlling the reset state of a link layer of each data transmission apparatus, data transmission in which the data bypasses the link layer is easily achieved. For example, the reset state of each link layer is controlled by an initialization process which is performed on all data transmission apparatuses, and thus the data transmission apparatuses can transition to their respective modes synchronously.

In the case where the transmission signal is generated in a physical layer by mapping each symbol of transmission data to any of a plurality of signal levels, and the reception data is generated based on evaluation levels for distinguishing and evaluating each signal level of the transmission signal, the first data transmission apparatus sends out a transmission signal by performing a data transmission process involving a mapping process after a data reception process involving a data evaluation of a received transmission signal, and thus data transmission can be performed while reducing deterioration of data occurring in a transmission signal to be transmitted and received.

Specifically, the communication protocol to be used in the data transmission method of the present invention is defined by MOST. Thus, even when communication is performed using MOST as the communication protocol, the same advantageous effects as those described above can be obtained.

According to the data transmission system and data transmission apparatus of the present invention, the same advantageous effects as those described for the data transmission method of the present invention can be obtained.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating a configuration of a data transmission system according to one embodiment of the present invention;
FIG. 2 is a block diagram illustrating a configuration of a data transmission apparatus 1 of FIG. 1;
FIG. 3 shows the first half of a flowchart illustrating an operation that in the data transmission system of FIG. 1 where all data transmission apparatuses 1 are operating in a normal mode, some of the data transmission apparatuses 1 transition to a bypass mode;
FIG. 4 shows the second half of the flowchart illustrating an operation of returning to the normal mode from the bypass mode in the data transmission system of FIG. 1;
FIG. 5 is a sequence diagram chronologically showing the operating state of each data transmission apparatus 1 during a transition process of a link layer and a physical layer in a data transmission system of FIG. 3;
FIG. 6 is a block diagram illustrating a configuration of a conventional data transmission system using electrical communication; and
FIG. 7 is a sequence diagram showing an initialization process in the data transmission system of FIG. 6.

### DESCRIPTION OF THE PREFERRED EMBODIMENTS

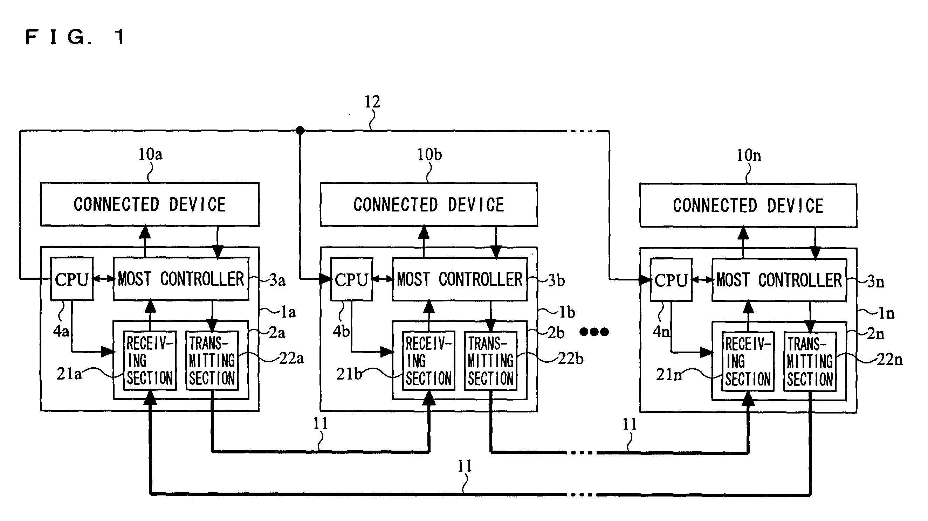

With reference to FIG. 1, a data transmission system according to one embodiment of the present invention is described. FIG. 1 is a block diagram illustrating a configuration of the data transmission system.

In FIG. 1, the data transmission system adopts a ring topology as its physical topology to interconnect a plurality of nodes, thereby forming a unidirectional ring-type LAN. As an exemplary data transmission system, a system is described below, in which data transmission apparatuses of n stages 1a to 1n, acting as nodes, are interconnected with each other via transmission paths 11 in a ring configuration and data is transmitted in one direction through the transmission paths 11. The data transmission apparatuses 1a to 1n respectively have devices 10a to 10n connected thereto (e.g., audio devices, navigation devices, information terminal devices, security devices, surveillance cameras, etc.) which perform processing based on data transmitted to the data transmission system and then output the results thereof to the data transmission system. In a common hardware configuration, the data transmission apparatuses 1a to 1n and the connected devices 10a to 10n are integrally constructed.

In the above-described data transmission system, Media Oriented Systems Transport (hereinafter referred to as "MOST"), for example, may be used as its information communication protocol. In the case where data transmission is performed using MOST as its communication protocol, data is transmitted on a frame-by-frame basis, such that frames are transmitted sequentially between the data transmission apparatuses 1a to 1n in one direction. That is, the data transmission apparatus 1a outputs data to the data transmission apparatus 1b through a transmission path 11. The data transmission apparatus 1b outputs data to the data transmission apparatus 1c through a transmission path 11, and a data transmission apparatus 1 (n-1) outputs data to a data transmission apparatus 1n through a transmission path 11. Then, the data transmission apparatus 1n outputs data to the data transmission apparatus 1a through a transmission path 11. Using inexpensive cables, such as twisted pair cables or coaxial cables, as the transmission paths 11, electrical communication is performed between the data transmission apparatuses 1a to 1n. In this data transmission system, the data transmission apparatus 1a acts as a master that sends data in accordance with its own clocks, and the data transmission apparatuses 1b to 1n act as slaves that lock frequencies to the clocks generated by the master.

Now, the configuration of the data transmission apparatuses 1a to 1n are described. The data transmission apparatuses 1a to 1n have substantially the same configuration. As a representative of the data transmission apparatuses, first, a schematic configuration of the data transmission apparatus 1a, acting as the master, and the flow of transmission/reception data are described.

The data transmission apparatus 1a includes a transmitting/receiving section (physical layer) 2a, a MOST controller (link layer) 3a, and a CPU (Central Processing Unit: microprocessor) 4a. The transmitting/receiving section 2a has a receiving section 21a and a transmitting section 22a.

For example, the MOST controller 3a is composed of an LSI and uses a MOST controller chip in which a communication protocol for use in the above-described data transmission system is defined. To the MOST controller 3a is connected a connected device 10a that performs processing based on data transmitted from the MOST controller 3a and outputs the results thereof to the MOST controller 3a. One of the functions of the MOST controller 3a is to convert data transmitted from the connected device 10a into a protocol defined by MOST and then output a digital data string to the transmitting section 22a of the transmitting/receiving section 2a. In addition, the MOST controller 3a receives a digital data string outputted from the receiving section 21a and transmits the digital data string to the connected device 10a.

The CPU 4a controls the MOST controller 3a and the transmitting/receiving section 2a of the data transmission apparatus 1a. The CPU 4a controls, for example, a reset function, power, a master/slave selection process, and a diag-mode conversion process of the data transmission apparatus 1a. Further, the CPU 4a establishes a serial connection to CPUs 4b to 4n of other data transmission apparatuses 1b to 1n via transmission lines 12 which are different from the transmission paths 11, and instructs the CPUs 4b to 4n as to a bypass mode selection process, as will be described later. Note that in addition to the CPUs 4a to 4n of the data transmission apparatuses 1a to 1n, it is also possible to additionally provide a CPU for controlling a bypass mode of the data transmission system. In this case, an additionally provided CPU establishes a serial connection to the CPUs 4a to 4n via the transmission lines 12.

The transmitting/receiving section 2a is typically composed of an LSI. As described above, a digital data string is outputted to the transmitting section 22a from the MOST controller 3a. The transmitting section 22a sets a predetermined bit of the digital data string as a data symbol and performs a mapping process on the data symbols in accordance with a conversion table and a filtering process. The transmitting section 22a then converts a signal having been subjected to the mapping and filtering processes into an analog signal, amplifies the analog signal, converts the analog signal to a differential signal, and sends out the differential signal to the transmission path 11. That is, the digital signal having been subjected to the mapping and filtering processes in the transmitting section 22a is outputted as an analog waveform of a predetermined period in which the above-described digital data string is mapped to any of a plurality of signal levels. The configuration and operation of the transmitting section 22a will be described in more detail later.

The receiving section 21a receives, via the transmission path 11, an analog signal outputted from the data transmission apparatus 1n and converts the analog signal to a digital signal. The receiving section 21a decodes the digital signal into data symbols by subjecting the digital signal to filtering and reverse mapping processes, converts the data symbols into a digital data string, and then outputs the digital data string to the MOST controller 3a. The configuration and operation of the receiving section 21a will be described in more detail later.

The configuration of the data transmission apparatuses 1b to 1n, acting as slaves, is the same as that of the data transmission apparatus 1a, acting as the master. In the following description, the configuration parts of the data transmission apparatuses 1b to 1n, acting as slaves, are described using the reference letters "b" to "n" added to their respective configuration parts, instead of using the reference letter "a" added to the configuration part of the data transmission apparatus 1a, acting as a master. When the data transmission apparatuses 1a to 1n and their respective configuration parts are collectively described, the reference letters "a" to "n" added to the respective configuration parts are omitted and it is simply referred to as the data transmission apparatus 1.

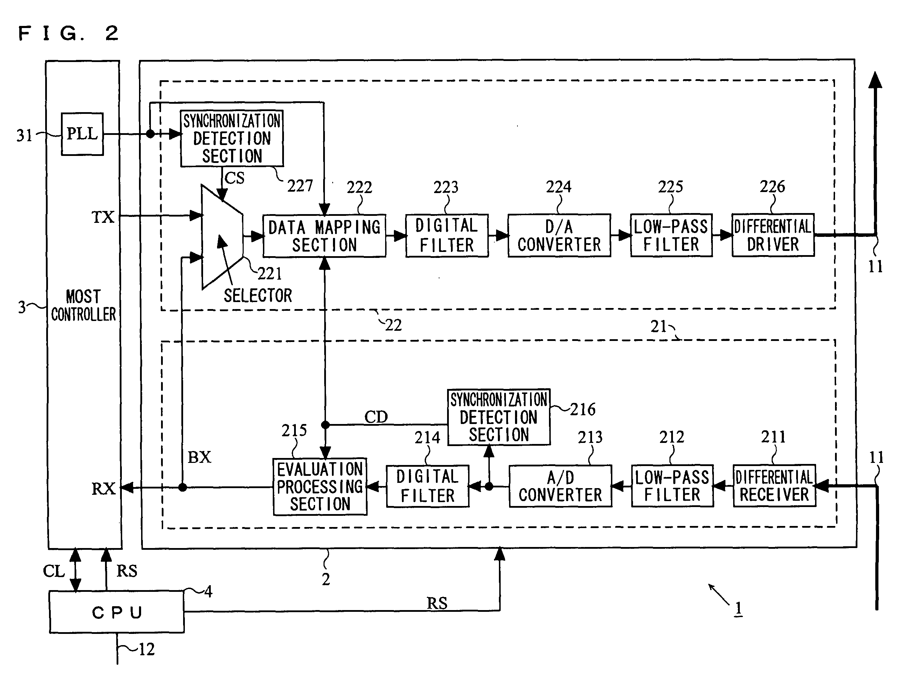

With reference to FIG. 2, the configuration of the data transmission apparatus 1 is described in detail. FIG. 2 is a block diagram illustrating the configuration of the data transmission apparatus 1.

In FIG. 2, as described above, the data transmission apparatus 1 includes a transmitting/receiving section 2 having a receiving section 21 and a transmitting section 22, a MOST controller 3, and a CPU 4. The receiving section 21 has a differential receiver 211, a low-pass filter 212, an A/D converter 213, a digital filter 214, an evaluation processing section 215, and a synchronization detection section 216. The transmitting section 22 has a selector 221, a data mapping section 222, a digital filter 223, a D/A converter 224, a low-pass filter 225, a differential driver 226, and a synchronization detection section 227. The MOST controller 3 has a PLL 31.

From the MOST controller 3, a transmission digital data string TX is outputted to the transmitting section 22. The transmission digital data string TX is then inputted to the data mapping section 222 via the selector 221. If the synchronization detection section 227, as will be described later, has detected synchronization of the PLL 31 of the MOST controller 3 and inputted a synchronization detection signal CS to the selector 221, the selector 221 selects the transmission digital data string TX outputted from the MOST controller 3 and inputs it to the data mapping section 222. On the other hand, if the synchronization detection section 227 has not detected synchronization of the PLL 31 of the MOST controller 3 (i.e., the synchronization detection section 227 has not inputted a synchronization detection signal CS to the selector 221), the selector 221 selects a bypass digital data string BX outputted from the receiving section 21 and inputs the bypass digital data string BX to the data mapping section 222. Note that the operations of the transmitting section 22, as will be described later, performed on the transmission digital data string TX and the bypass digital data string BX are the same, and thus, as a representative example, operations performed on the transmission digital data string TX will be described below.

The data mapping section 222 sets a predetermined bit of the transmission digital data string TX as a data symbol, performs amapping process on the data symbols in accordance with a conversion table, and then outputs the mapped data to the digital filter 223. Specifically, the data mapping section 222 converts the serial transmission digital data string TX into a parallel one so as to perform multivalued transmission. In the case where MOST is used as a communication protocol, as the transmission digital data string TX, 2-bit information is outputted per one symbol from the MOST controller 3, and thus the data mapping section 222 converts data inputted in a serial format into 2-bit parallel data. Subsequently, the data mapping section 222 maps the converted 2-bit parallel data to any of eight-value symbols in accordance with a recovered clock CD which is recovered and locked in the synchronization detection section 216 of the receiving section 21 or in accordance with a transmission clock outputted from the PLL 31 of the MOST controller 3. The mapping is performed in such a manner that the upper four symbols and the lower four symbols of the eight value symbols are alternately assigned to the 2-bit parallel data, so that clock recovery is performed on another data transmission apparatus 1 provided at a receiving end. In addition, the mapping is performed using the difference between the current and previous values so as to eliminate the influence caused by changes or differences in the direct-current component between transmission and reception.

The digital filter 223 (e.g., aroll-off filter) performs a filtering process on the data having been subjected to a mapping process and outputs the filtered data to the D/A converter 224. The digital filter 223 is a waveform shaping filter for limiting the band of an electrical signal to be transmitted and reducing intersymbol interference. For example, an FIR filter with a roll-off factor of 100% is used.

The D/A converter 224 converts the signal outputted from the digital filter 223 into an analog signal. The D/A converter 224 is, for example, a 12-bit D/A converter which is operated at 100 MHz. The D/A converter 224 outputs an analog signal so that a sine wave, in which the above-described transmission symbol values reach the maximum or minimum amplitude level alternately, can be outputted at the output end of the differential driver 226. The low-pass filter 225 attenuates the high frequencies of the analog signal outputted from the D/A converter 224 and inputs the high-frequency attenuated analog signal to the differential driver 226.

The differential driver 226 amplifies the strength of the analog signal outputted from the low-pass filter 225, converts the analog signal to a differential signal, and sends out the differential signal to the transmission path 11. The differential driver 226 sends an electrical signal to one (positive side) of a pair of leads, which form the transmission path 11, and sends a signal having the opposite polarity to the electrical signal to the other one (negative side) of the pair of leads. Thus, a positive electrical signal and a negative electrical signal are transmitted as a pair to the transmission path 11, whereby changes occurring in the respective electrical signals counteract each other, making it possible to reduce radiation noise from the transmission path 11 and external electrical influences. In the manner described above, from the transmitting section 22 is outputted an electrical signal having a waveform of a predetermined period in which the transmission digital data string TX is mapped to any of a plurality of signal levels. Such an electrical signal is obtained by performing the mapping, filtering, and DA conversion processes.

The synchronization detection section 227 detects, with the use of a transmission digital data string TX and a transmission clock which are outputted from the MOST controller 3, data frames included in the transmission digital data string TX. For example, the data frames are detected by periodically detecting frame headers included in the data frame. By the detection of data frames, the establishment of synchronization of the MOST controller 3 is detected. After detecting the establishment of synchronization of the MOST controller 3, the synchronization detection section 227 outputs a synchronization detection signal CS to the selector 221.

The differential receiver 211 of the receiving section 21 receives an electrical signal (differential signal) sent out from a previous data transmission apparatus 1, via the transmission path 11. The differential receiver 211 converts the differential signal to a voltage signal and outputs the voltage signal to the low-pass filter 212. As described above, since a positive electrical signal and a negative electrical signal are transmitted as a pair over a pair of leads forming the transmission path 11, the differential receiver 211 determines a signal by the difference between the positive and negative electrical signals, making the signals immune to external electrical influences.

The low-pass filter 212 attenuates noise at high frequencies which is contained in the voltage signal outputted from the differential receiver 211 and then inputs the high-frequency attenuated voltage signal to the A/D converter 213. The A/D converter 213 converts the voltage signal outputted from the low-pass filter 212 into a digital signal and then outputs the digital signal to the digital filter 214.

The digital filter 214 performs a filtering process on the digital signal outputted from the A/D converter 213. The digital filter 214 is composed of, for example, a roll-off filter. The digital filter 214 is a waveform shaping FIR filter for removing noise from the digital signal outputted from the A/D converter 213. By a combination of this roll-off filter and the aforementioned roll-off filter (digital filter 223) at the transmitting end, roll-off characteristics with no intersymbol interference can be realized.

The synchronization detection section 216 recovers a clock component of the signal which is outputted from the A/D converter 213 and received through the transmission path 11, to recover the clock of the received data, and detects data symbol timing which is the maximum or minimum amplitude point of the above-described transmission waveform. The recovered clock CD which is recovered in the synchronization detection section 216 is used as a clock for the evaluation processing section 215 and the data mapping section 222.

The evaluation processing section 215 performs a reverse mapping process on the digital signal outputted from the digital filter 214 to decode the digital signal into data symbols, converts the data symbols into a reception digital data string RX, and then outputs the reception digital data string RX to the MOST controller 3. Specifically, the evaluation processing section 215 calculates a difference value between a received symbol value outputted from the digital filter 214 and a previous symbol value, based on the data symbol timing detected in the synchronization detection section 216. By thus evaluating the received symbol value using the difference value between the received symbol value and a previous symbol value, it is possible to negate an overall voltage change which occurs at the time of transmission to a data transmission apparatus 1 at the receiving end from a data transmission apparatus 1 at the transmitting end. The evaluation processing section 215 performs data evaluation on each difference value based on evaluation levels set at the time of initialization, as will be described later, and performs a reverse mapping process on the resulting evaluation values. Specifically, in the reverse mapping process by the evaluation processing section 215, the above-described evaluation values are decoded into the data before it was mapped by the mapping process at the transmitting end, based on the data symbol timing detected in the synchronization detection section 216. By the reverse mapping process, the evaluation values are converted into parallel data. The evaluation processing section 215 then converts the parallel data having been subjected to the reverse mapping process into a serial reception digital data string RX and outputs the serial reception digital data string RX to the MOST controller 3. The reception digital data string RX is also outputted to the selector 221 as a bypass digital data string BX. When the selector 221 selects the bypass digital data string BX, the bypass digital data string BX is outputted to the data mapping section 222 of the transmitting section 22.

The CPU 4 controls the operation of the MOST controller 3 by transmitting and receiving a control signal CL to/from the MOST controller 3. In addition, the CPU 4 outputs a reset signal RS to the MOST controller 3 and the transmitting/receiving section 2, whereby the MOST controller 3 and the transmitting/receiving section 2 are placed in an initial standby state (hereinafter referred to as a "reset state") where data transmission/reception is not performed, or whereby the reset state is exited. The CPU 4 establishes a serial connection with a CPU 4 of another data transmission apparatus 1 via a transmission line 12. In the case of the master data transmission apparatus 1a, it instructs CPUs 4 of other data transmission apparatuses to select either the enter into the reset state or the exit from the reset state. In the case of slave data transmission apparatuses 1b to 1n, they receive instructions from the master CPU 4 as to whether they should enter or exit the reset state.

In a data transmission system having the above configuration, in order to define mechanical connections, an initialization process is performed on the MOST controllers 3a to 3n, serving as the link layers of the protocol, and on the transmitting/receiving sections 2a to 2n, serving as the physical layers of the protocol. During the initialization operation, the establishment of clock synchronization and the setting of evaluation levels, which serve as the reference for data evaluation, are performed on each of the data transmission apparatuses 1a to 1n. When the initialization process of the link layers and the physical layers is completed, all of the data transmission apparatuses 1 start data communication therebetween using their respective physical layers and link layers. An operation mode that the data transmission apparatus 1 performs data communication using the physical and link layers is hereinafter referred to as a "normal mode". Note that the sequential operations from the initialization process to the transition of all of the data transmission apparatuses 1 to the normal mode in the data transmission system are the same as those of a conventional data transmission system described in the "Description of the Background Art" section, and therefore a detailed description thereof will be omitted here.

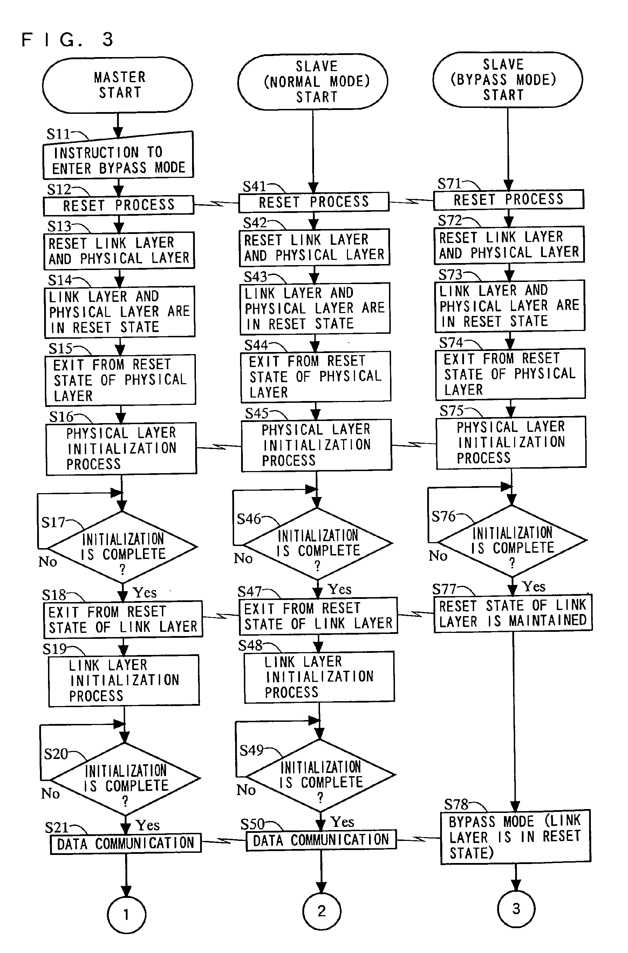

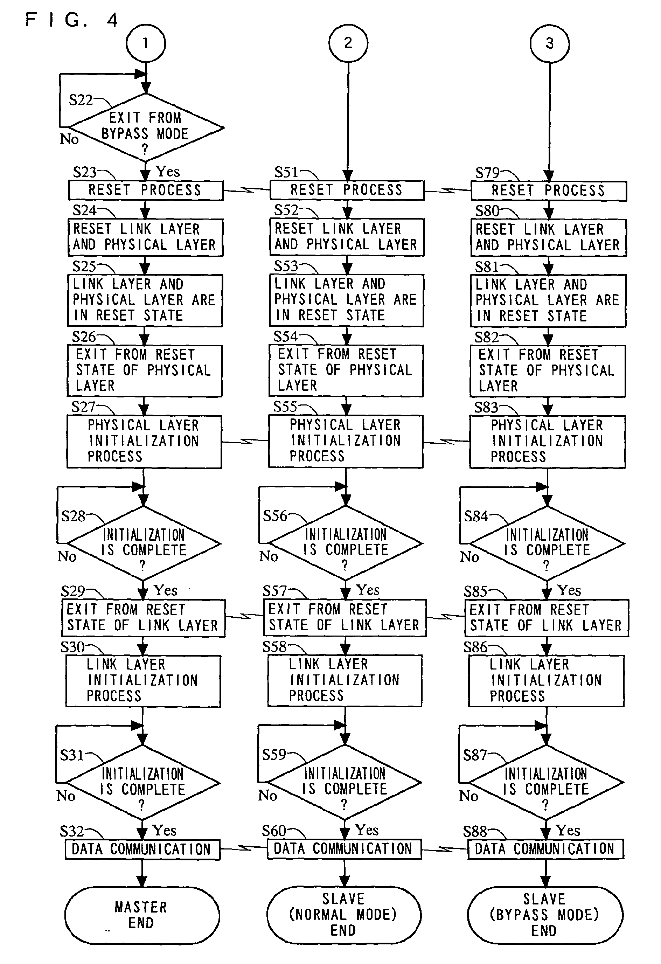

According to the data transmission system of the present invention, it is possible to perform data transmission such that some of the slave data transmission apparatuses 1 use only their physical layer (this data transmission is hereinafter referred to as a "bypass mode"). Specifically, a data transmission apparatus 1 operating in the bypass mode sends out data, which is received from a previous data transmission apparatus 1, to a subsequent data transmission apparatus 1 without allowing the data to pass through the link layer (MOST controller 3) thereof. For example, it is possible to allow the master data transmission apparatus 1a and data transmission apparatuses 1 having connected devices 10, such as a surveillance camera and a security system, to operate in the normal mode, while allowing data transmission apparatuses 1 having other connected devices 10 to operate in the bypass mode. With reference to FIGS. 3 and 4, the operation will be described below that some of the data transmission apparatuses transition to the bypass mode from the normal mode and then return to the normal mode. FIG. 3 shows the first half of a flowchart illustrating an operation that in a data transmission system where all data transmission apparatuses 1 are operating in the normal mode, some of the data transmission apparatuses 1 transition to the bypass mode, and FIG. 4 shows the second half of the flowchart illustrating an operation of returning to the normal mode from the bypass mode in the data transmission system.

In FIG. 3, when all data transmission apparatuses 1 are operating in the normal mode, a CPU 4 of a master data transmission apparatus 1a receives an instruction to allow some of the data transmission apparatuses 1 to transition to the bypass mode (step S11). The CPU 4a may receive this transition instruction, for example, in response to an operation of a predetermined SW performed by a user of the data transmission system or in response to a user' s operation of setting a vehicle key SW in an accessory position (i.e., a mode in which power is supplied only to in-vehicle accessories when the engine is stopped). In the case described above where there is additionally provided in the data transmission system a CPU for controlling the bypass mode, the CPU receives the above-described transition instruction. In order to provide a specific description, the case is described below where the master CPU 4a establishes serial connections with the CPUs 4b to 4n of data transmission apparatuses 1b to 1n via transmission lines 12 and instructs the CPUs 4b to 4n to select the bypass mode.

The master CPU 4a starts a reset process for placing its own transmitting/receiving section 2a and its own MOST controller 3a in a reset state (step S12), and instructs the slave CPUs 4b to 4n to perform a reset process, via the transmission lines 12. In accordance with the instruction, the slave CPUs 4b to 4n start the reset process for placing their respective transmitting/receiving sections 2b to 2n and MOST controllers 3b to 3n in a reset state (steps S41 and S71). The CPUs 4a to 4n each send out a reset signal RS for placing their respective transmitting/receiving sections 2a to 2n and MOST controllers 3a to 3n in the reset state (steps S13, S42, and S72). When the transmitting/receiving sections 2a to 2n and the MOST controllers 3a to 3n receive the reset signal RS, they enter the reset state (steps S14, S43, and S73). By these operations, all of the link and physical layers in the data transmission system enter the reset state.

After a lapse of a predetermined period of time from the reset process, the CPUs 4a to 4n output to the transmitting/receiving sections 2a to 2n a reset signal RS for causing the transmitting/receiving sections 2a to 2n to exit the reset state (steps S15, S44, and S74). When the transmitting/receiving sections 2a to 2n receive the reset signal RS, a physical layer initialization process starts (steps S16, S45, and S75).

The physical layer initialization process is described in detail below. First, the master transmitting/receiving section 2a sends a lock signal to a transmission path 11 in accordance with an output frequency obtained using the reference frequency of its own oscillator. The lock signal is, for example, a sine wave signal which is based on a clock frequency of the master data transmission apparatus 1a.

The slave transmitting/receiving 2b receives the lock signal through the transmission path 11, performs clock recovery in the synchronization detection section 216b, and sets a reception PLL. The transmitting/receiving section 2b then sends the lock signal to a transmission path 11 in accordance with a recovered clock of the reception PLL. Likewise, the other, slave transmitting/receiving sections 2c to 2n receive a lock signal sent out from their respective upstream data transmission apparatuses 1, perform clock recovery, set a reception PLL, and then send the lock signal to their respective downstream data transmission apparatuses 1 in accordance with a recovered clock of the reception PLL. The master transmitting/receiving section 2a receives the lock signal sent from the transmitting/receiving section 2n of the immediately upstream data transmission apparatus, performs clock recovery, and sets a reception PLL.

The master transmitting/receiving section 2a generates therein a training signal for setting evaluation levels which serve as the reference for data evaluation with respect to the slave transmitting/receiving section 2b provided immediately downstream thereof, and sends the training signal to the transmission path 11. The training signal includes, for example, a clock recovery sine wave in which the maximum and minimum amplitude levels appear alternately; a training pattern header in which, for example, the maximum or minimum amplitude level is maintained for a predetermined period of time; and a training pattern which is a known data pattern between the data transmission apparatuses 1. The training pattern uses, for example, a PN pattern signal which contains all of the aforementioned symbol values in various patterns.

The slave transmitting/receiving section 2b receives the training signal through the transmission path 11, immediately generates a training signal to be sent to the data transmission apparatus 1c immediately downstream thereof, and sends the training signal to the transmission path 11. The transmitting/receiving section 2b sets, in its own receiving section 21b, evaluation levels to be used as thresholds in evaluating a transmission level of each symbol value, using the received training signal, and then set evaluation values based on the evaluation levels which serve as boundaries. Likewise, the other, slave transmitting/receiving sections 2c to 2n receive training signals sent out from their respective upstream data transmission apparatuses 1 and then immediately send their respective training signals to their respective downstream data transmission apparatuses 1. Then, the other, slave transmitting/receiving sections 2c to 2n set, in the receiving sections 21c to 21n thereof, evaluation levels to be used as thresholds in evaluating a transmission level of each symbol value, using the training signals received from their respective upstream data transmission apparatuses 1, and then sets evaluation values based on the evaluation levels which serve as boundaries. Similarly, the master transmitting/receiving section 2a sets evaluation levels to be used as thresholds in evaluating a transmission level of each symbol value, using the training signal received from the transmitting/receiving section 2n, and then sets evaluation values based on the evaluation levels which serve as boundaries.

By these operations, the physical layer initialization process in the data transmission system is completed, whereby the physical layers can perform data communication therebetween. Then, the transmitting/receiving sections 2a to 2n output to the CPUs 4a to 4n a notification that the initialization process has been completed. In order that all of the transmitting/receiving sections 2a to 2n can output the notification of completion of the initialization process synchronously, the master transmitting/receiving section 2a may output to the transmission paths 11 a signal for prompting the transmitting/receiving sections 2b to 2n to output the notification of completion of the initialization process. In addition, the transmitting/receiving sections 2a to 2n may output, after a lapse of a predetermined period of time from the execution of the evaluation level setting process, the notification of completion of the initialization process to the CPUs 4a to 4n, respectively. The CPUs 4a to 4n determine whether the physical layer initialization process is completed, by the reception of the notification of completion of the initialization process outputted from the transmitting/receiving sections 2a to 2n (steps S17, S46, and S76).

If the notification of completion of the initialization process is sent from the transmitting/receiving section 2a, the CPU 4a outputs to the MOST controller 3a a reset signal RS for causing the MOST controller 3a to exit the reset state (step S18). The CPU 4a then sends out an instruction to inhibit exit from the reset state of the link layer to any one or more of the CPUs 4b to 4n of the data transmission apparatuses 1b to 1n operating in the bypass mode, via the transmission lines 12. Any one or more of the CPUs 4b to 4n to which the CPU 4a sends out an instruction to inhibit exit from the reset state is preset. For example, in the case where the master data transmission apparatus 1a and data transmission apparatuses 1 having connected devices 10, such as a surveillance camera and a security system, need to operate in the normal mode, while data transmission apparatuses 1 having other connected devices 10 need to operate in the bypass mode, a setting is made so as to send out only to those CPUs 4 of the data transmission apparatuses 1 which need to operate in the bypass mode an instruction to inhibit exit from the reset state. Note that the instruction to inhibit exit from the reset state may be sent out at the time of the reset process (steps S12, S41, and S71). In addition, although any one or more of the CPUs 4b to 4n of the data transmission apparatuses 1b to 1n operating in the normal mode automatically causes the link layer to exit the reset state, as will be described later, the CPU 4a may also send out to the any one or more of the CPUs 4b to 4n an instruction to cause the link layer to exit the reset state.

If any one or more of the CPUs 4b to 4n which has not received the instruction to inhibit exit from the reset state receives a notification of completion of the initialization process from any of the transmitting/receiving sections 2b to 4n, the any one or more of the CPUs 4b to 4n automatically outputs a reset signal RS for causing any corresponding MOST controllers 3b to 3n to exit the reset state, to the any corresponding MOST controllers 3b to 3n (step S47). If any one or more of the CPUs 4b to 4n which has received the instruction to inhibit exit from the reset state receives a notification of completion of the initialization process from any of the transmitting/receiving sections 2b to 4n, the any one or more of the CPUs 4b to 4n maintains the reset state of any corresponding MOST controllers 3b to 3n (step S77).

Any one or more of the MOST controllers 3 to which the reset signal RS is inputted in steps S18 and S47 starts a link layer initialization process (steps S19 and S48).

The link layer initialization process for the case where some of the data transmission apparatuses 1 operate in the bypass mode is described in detail below. The master MOST controller 3a exits its reset state by a reception of a reset signal RS and performs its own initialization by a reception of a control signal CL. The PLL 31a of the MOST controller 3a operates in accordance with an output frequency obtained using the reference frequency of an oscillator of the transmitting/receiving section 2a. The MOST controller 3a outputs to the transmitting section 22a initialization data for performing initialization (which includes, for example, frame synchronization with another MOST controller 3) as a transmission digital data string TX.

The synchronization detection section 227a of the transmitting section 22a detects data frames included in the initialization data based on the initialization data outputted from the MOST controller 3a and its transmission clock, and detects the establishment of synchronization of the MOST controller 3a by periodically detecting frame headers included in the data frame. When the synchronization detection section 227a has detected the establishment of synchronization of the MOST controller 3a, the synchronization detection section 227a outputs a synchronization detection signal CS to the selector 221a. When the synchronization detection signal CS has been inputted to the selector 221a, the selector 221a inputs to the data mapping section 222a the initialization data outputted from the MOST controller 3a. Subsequently, the initialization data is subjected to the above-described mapping and filtering processes in the transmitting section 22a, converted into an analog signal, and then sent out to a transmission path 11.

The receiving section 21b of the slave data transmission apparatus 1b receives the initialization data through the transmission path 11, converts the initialization data into a digital signal in the manner described above, and performs filtering and a reverse mapping processes on the digital signal. In the case of a slave data transmission apparatus 1b in which the reset state of its link layer is exited in step S47, the initialization data is outputted as a reception digital data string RX to the MOST controller 3b from the evaluation processing section 215b. The MOST controller 3b establishes frame synchronization with the master MOST controller 3a using the inputted initialization data and locks the PLL 31b, and thereafter outputs the initialization data to the transmitting section 22b. The synchronization detection section 227b of the transmitting section 22b detects data frames included in the initialization data based on the initialization data outputted from the MOST controller 3b and its transmission clock, and detects the establishment of synchronization of the MOST controller 3b by periodically detecting frame headers included in the data frame. When the synchronization detection section 227b has detected the establishment of synchronization of the MOST controller 3b, the synchronization detection section 227b outputs a synchronization detection signal CS to the selector 221b. When the synchronization detection signal CS has been inputted to the selector 221b, the selector 221b inputs to the data mapping section 222b the initialization data outputted from the MOST controller 3b. Subsequently, the initialization data is subjected to the above-described mapping and filtering processes in the transmitting section 22b, converted into an analog signal, and then sent out to a transmission path 11. Until the synchronization detection section 227b has outputted the synchronization detection signal CS to the selector 221b, the selector 221b inputs to the data mapping section 222b the initialization data outputted from the evaluation processing section 215b as a bypass digital data string BX. The bypass digital data string BX (i.e., the initialization data which has bypassed the MOST controller 3b) is subjected to the above-described mapping and filtering processes in the transmitting section 22b, converted into an analog signal, and then sent out to the transmission path 11.

In the case of a slave data transmission apparatus 1b in which the reset state of its link layer is maintained in the foregoing step S77 (i.e., exit from the reset state is inhibited), the synchronization detection section 227b cannot detect the establishment of synchronization with the MOST controller 3b. Accordingly, a synchronization detection signal CS is not outputted to the selector 221b, and therefore the selector 221b inputs to the data mapping section 222b the initialization data which is outputted from the evaluation processing section 215b at all times, as a bypass digital data string BX. The bypass digital data string BX (i.e., the initialization data which has bypassed the MOST controller 3b) is subjected to the above-described mapping and filtering processes in the transmitting section 22b, converted into an analog signal, and then sent out to the transmission path 11. That is, a data transmission apparatus 1 in which the reset state of its link layer is maintained sends out the initialization data received from an immediately upstream data transmission apparatus 1, to an immediately downstream data transmission apparatus 1 only through its own physical layer.

Likewise, other MOST controllers 3c to 3n perform the same operations as those of the slave MOST controller 3b. Specifically, in the case of a MOST controller 3 in which its reset state is exited in the foregoing step S47, frame synchronization with the master MOST controller 3a is established using inputted initialization data and then the initialization data is outputted to the transmitting section 22. In the case of a MOST controller 3 in which its reset state is maintained in the foregoing step S77, a data transmission apparatus 1 sends out initialization data received from an immediately upstream data transmission apparatus 1, to an immediately downstream data transmission apparatus 1 only through its own physical layer.

The master MOST controller 3a determines, during the link layer initialization process which starts in the foregoing step S19, whether a network of the whole data transmission system is established. The MOST controller 3a determines the establishment of a network, for example, by receiving a network establishment confirmation signal, which is sent out therefrom via the transmitting section 22a, a predetermined number of times via other data transmission apparatuses 1b to 1n and the receiving section 21a. The MOST controller 3a provides an identifier indicating the establishment of a network to a predetermined data frame and sends the data frame to all of the slave data transmission apparatuses 1b to 1n. After the establishment of a network, the MOST controller 3a completes the link layer initialization process and outputs to the CPU 4a a control signal CL which indicates the completion of the process. The CPU 4a waits for the link layer initialization process by the MOST controller 3a to be completed. By receiving the control signal CL which indicates the completion of the process, the CPU 4a determines the completion of the initialization process (step S20). Then, the CPU 4a outputs to the MOST controller 3a a control signal CL instructing the MOST controller 3a to start data communication. When the MOST controller 3a has received the control signal CL, data communication with other data transmission apparatuses 1 starts (step S21).

In the case of a MOST controller 3 in which its reset state is exited in the foregoing step S47, the MOST controller 3 determines the establishment of a network by receiving a data frame having an identifier that indicates the establishment of a network from the master data transmission apparatus 1a. After the establishment of a network, the MOST controller 3 completes the link layer initialization process and outputs to a CPU 4 a control signal CL which indicates the completion of the process. The CPU 4 waits for the link layer initialization process by the MOST controller 3 to be completed. By receiving the control signal CL which indicates the completion of the process, the CPU 4 determines the completion of the initialization process (step S49). Then, the CPU 4 outputs to the MOST controller 3 a control signal CL instructing the MOST controller 3 to start data communication. When the MOST controller 3 has received the control signal CL, data communication with other data transmission apparatuses 1 starts (step S50).

In the case of a MOST controller 3 in which its reset state is maintained in the foregoing step S77, a data transmission apparatus 1 sends out a data frame having an identifier that indicates the establishment of a network, which is received from an immediately upstream data transmission apparatus 1, to an immediately downstream data transmission apparatus 1 only through its own physical layer. In the case of a data transmission apparatus 1 in which the reset state of its link layer is maintained, even if other data transmission apparatuses 1 start data communication (steps S21 and S50), the data transmission apparatus 1 operates in the bypass mode such that it sends out data to be transmitted from an immediately upstream data transmission apparatus 1 during the data communication, to an immediately downstream data transmission apparatus 1 only through its own physical layer (step S78).

In a data transmission apparatus 1 which operates in the bypass mode, an electrical signal sent out from an immediately upstream data transmission apparatus 1 through a transmission path 11 is inputted to the differential receiver 211 of the receiving section 21. The inputted electrical signal is filtered and converted into digital data by the low-pass filter 212, the A/D converter 213, and the digital filter 214. The digital data is decoded into data symbols by the evaluation processing section 215 and then outputted to the transmitting section 22 as a bypass digital data string BX. The transmitting section 22 treats the bypass digital data string BX in the same manner as the transmission digital data string TX. Specifically, the bypass digital data string BX is converted into an analog signal by mapping and filtering processes performed in the transmitting section 22, and then sent out to an immediately downstream data transmission apparatus 1 as an electrical signal through a transmission path 11. In the physical layer of the data transmission apparatus 1 operating in the bypass mode, the received electrical signal is subjected to filtering,A/D conversion,and data evaluation processes,followed by mapping, filtering, and D/A conversion processes, and then the electrical signal is sent out to an immediately downstream data transmission apparatus. Therefore, data transmission can be performed while reducing deterioration of data occurring in an electrical signal to be transmitted and received. In addition, in the data transmission apparatus 1 operating in the bypass mode, a MOST controller 3 maintains its reset state, and therefore the MOST controller 3 does not perform data transmission/reception. This reduces the power consumption of the MOST controller 3. Moreover, generally, the supply of power to a connected device 10 which is connected to the MOST controller 3 in the reset state (see FIG. 1) is also stopped, making it possible to significantly reduce the power consumption of the connected device 10 connected to a data transmission apparatus 1 operating in the bypass mode.

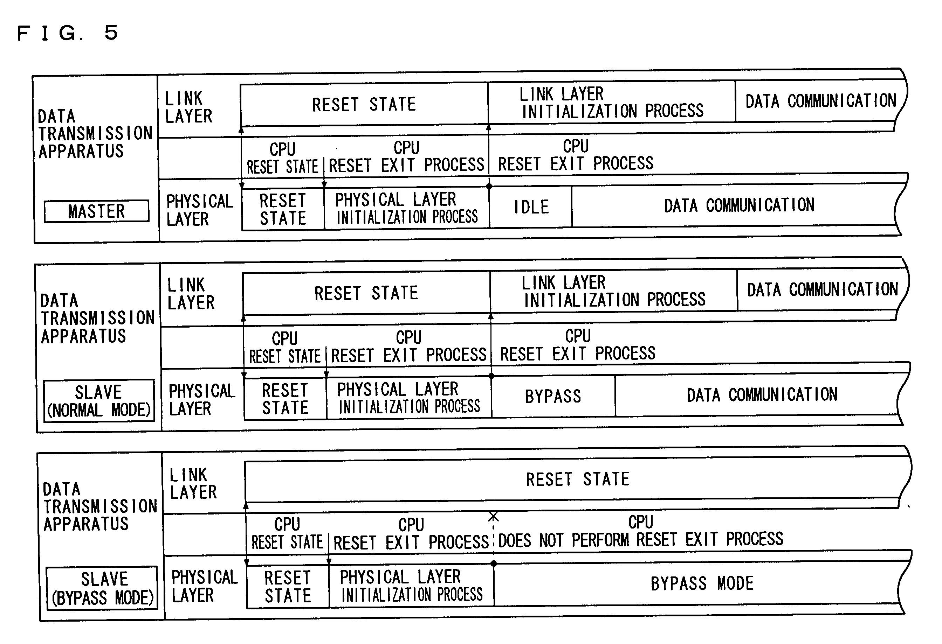

With reference to FIG. 5, the states of each data transmission apparatus 1 during a bypass mode transition process in the above-described data transmission system is described in a chronological manner. FIG. 5 is a sequence diagram chronologically showing the operating state of each data transmission apparatus 1 during a transition process of a link layer and a physical layer in the above-described data transmission system.

In FIG. 5, all of the link layers (i.e., MOST controllers 3) and physical layers (i.e., transmitting/receiving sections 2) of data transmission apparatuses 1 enter a reset state by a reset process performed by their respective CPUs 4. In the physical layer of each data transmission apparatus 1, a physical layer initialization process is performed in response to a reset exit process performed by the respective CPUs 4. Then, in the link layer of a master data transmission apparatus 1 and a data transmission apparatus 1 operating in a normal mode, after the completion of the physical layer initialization process, a link layer initialization process is performed in response to a reset exit process performed by the respective CPUs 4. After the completion of the link layer initialization process, the master data transmission apparatus 1 and the data transmission apparatus 1 operating in the normal mode start data communication using their respective physical layers and link layers. As can be seen by comparing with FIG. 7, in the data transmission apparatus 1 operating in the bypass mode, the link layer maintains its reset state even after the completion of its physical initialization process, because the CPU 4 does not perform the reset exit process. Therefore, after the completion of the link layer initialization process of other data transmission apparatuses 1, the data transmission apparatus 1 operating in the bypass mode transmits data using only its own physical layer by bypassing its own link layer.

With reference to FIG. 4, an operation of returning to the normal mode from the bypass mode in the data transmission system is described. In FIG. 4, when some of the data transmission apparatuses 1 are operating in the bypass mode, the CPU 4a of the master data transmission apparatus 1a waits for an instruction to exit the bypass mode (step S22). The CPU 4a may receive this exit instruction, for example, in response to an operation of a predetermined SW performed by a user of the data transmission system or in response to a user's operation of setting a vehicle key SW in an engine start position. In the case described above where there is additionally provided in the data transmission system a CPU for controlling the bypass mode, the CPU receives the above-described exit instruction. In order to provide a specific description, the case is described below where the master CPU 4a establishes serial connections with CPUs 4b to 4n of data transmission apparatuses 1b to 1n via transmission lines 12 and instructs the CPUs 4b to 4n to exit the bypass mode.

If the master CPU 4a has received in step S22 the instruction to exit the bypass mode, the CPU 4a starts a reset process for placing its own transmitting/receiving section 2a and MOST controller 3a in a reset state (step S23), and at the same time provides an instruction to perform a reset process to the slave CPUs 4b to 4n through transmission lines 12. According to the instruction, the slave CPUs 4b to 4n start a reset process for placing their respective transmitting/receiving sections 2b to 2n and MOST controllers 3b to 3n in a reset state (steps S51 and S79). The CPUs 4a to 4n each send out a reset signal RS for placing their respective transmitting/receiving sections 2a to 2n and MOST controllers 3a to 3n in the reset state (steps S24, S52, and S80). The transmitting/receiving sections 2a to 2n and the MOST controllers 3a to 3n receive the reset signal RS, thereby entering the reset state (steps S25, S53, and S81). By these operations, all of the link and physical layers in the data transmission system enter the reset state.

After a lapse of a predetermined period of time from the reset process, the CPUs 4a to 4n output to the transmitting/receiving sections 2a to 2n a reset signal RS for causing the transmitting/receiving sections 2a to 2n to exit the reset state (steps S26, S55, and S82). The transmitting/receiving sections 2a to 2n receive the reset signal RS, thereby starting a physical layer initialization process (steps S27, S55, and S83). The physical layer initialization process is performed in the same manner as the foregoing steps S16, S17, S45, S46, S75, and S76, and thus a detailed description thereof will be omitted.

If a notification of completion of the initialization process has been sent from the transmitting/receiving section 2a, the CPU 4a outputs to the MOST controller 3a a reset signal RS for causing the MOST controller 3a to exit the reset state (step S29). Note, however, that in the case of exiting the bypass mode, the CPU 4a does not send out the instruction to inhibit exit from the reset state of the link layer, through the transmission line 12. In the case where exit from the reset state is not inhibited, although any one or more of the CPUs 4b to 4n of the data transmission apparatuses 1b to 1n operating in the normal mode automatically causes the link layer to exit the reset state, the CPU 4a may send out to all of the CPUs 4b to 4n an instruction to cause the link layer to exit the reset state.

If a notification of completion of the initialization process has been sent from the transmitting/receiving sections 2b to 4n, the CPUs 4b to 4n automatically output to the MOST controllers 3b to 3n a reset signal RS for causing the MOST controllers 3b to 3n to exit the reset state (steps S57 and S85).

Subsequently, the MOST controllers 3 to which the reset signal RS is inputted in the foregoing steps S29, S57, and S85 start a link layer initialization process (steps S30, S58, and S86). The link layer initialization process is performed in the same manner as the foregoing steps S19, S20, S48, and S49, and thus a detailed description thereof will be omitted.

The CPU 4a outputs to the MOST controller 3a a control signal CL that instructs the MOST controller 3a to start data communication. When the MOST controller 3a has received the control signal CL, data communication with other data transmission apparatuses 1 starts (step S32). The slave CPUs 4b to 4n, on the other hand, respectively output to the MOST controllers 3b to 3n a control signal CL that instructs to start data communication. When the MOST controllers 3b to 3n have received the control signal CL, data communication with other data transmission apparatuses 1 starts (steps S60 and S88). Thus, in the case of a transition from a state where some of the data transmission apparatuses 1 operate in the bypass mode to a state where all of the data transmission apparatuses 1 operate in the normal mode, data communication starts after an initialization process has been performed on all of the physical and link layers.

In a data transmission apparatus which operates in the bypass mode in a data transmission system of the present embodiment, a MOST controller of the data transmission apparatus is in a reset state, and therefore the MOST controller does not perform data transmission/reception, making it possible to reduce the power consumption of the MOST controller. Moreover, generally, the supply of power to a connected device which is connected to the MOST controller in the reset state is also stopped, making it possible to significantly reduce the power consumption of the connected device connected to a data transmission apparatus which operates in the bypass mode. In the case where only some devices connected to a data transmission system need to operate, data transmission apparatuses having connected devices which do not need to operate are allowed to operate in the bypass mode, whereby it is possible to significantly reduce the power consumption of the entire system. In the physical layer of the data transmission apparatus operating in the bypass mode, a received electrical signal is subjected to filtering, A/D conversion, and data evaluation processes, followed by mapping, filtering, and D/A conversion processes, and then the electrical signal is sent out to an immediately downstream data transmission apparatus. Therefore, data transmission can be performed while reducing deterioration of data occurring in an electrical signal to be transmitted and received.

In the description of the present embodiment, the switching of the selector of the transmitting section is performed depending on the establishment of synchronization of the MOST controller, but the switching of the selector is not limited to thereto. For example, the selector of a data transmission apparatus may be switched depending on the presence or absence of a transmission digital data string to be outputted from a MOST controller of the apparatus, or may be switched directly by a CPU of the apparatus. That is, the selector may be switched by control from an outside of the transmitting section.

In the description of the present embodiment, a protocol defined by MOST is used in the link layer in a data transmission system, but the protocol is not limited thereto. For example, the present invention can be appropriately applied to a custom link layer other than a link layer defined by MOST.

While the invention has been described in detail, the foregoing description is in all aspects illustrative and not restrictive. It is understood that numerous other modifications and variations can be devised without departing from the scope of the invention.

## Claims

1. A data transmission method for transmitting and receiving a transmission signal between a plurality of data transmission apparatuses (1) interconnected via transmission paths (11) in a ring configuration, the transmission signal being based on data processed according to a predetermined communication protocol, the method comprising:
generating, in a physical layer (2) of a first data transmission apparatus (1), reception data (BX) in response to a transmission signal outputted from an immediately upstream data transmission apparatus (1), generating a transmission signal based on the reception data (BX), and outputting the transmission signal to an immediately downstream data transmission apparatus (1) (S78), the first data transmission apparatus being at least one of the plurality of data transmission apparatuses (1);
generating, in a physical layer (2) of a second data transmission apparatus (1), reception data (RX) in response to a transmission signal outputted from an immediately upstream data transmission apparatus (1), and processing the reception data (RX) in a link layer (3) of the second data transmission apparatus (1) according to the communication protocol, the second data transmission apparatus being the rest of the plurality of data transmission apparatuses (1) other than the first data transmission apparatus (1); and
processing transmission data (TX) in the link layer (3) of the second data transmission apparatus (1) according to the communication protocol, generating a transmission signal in the physical layer (2) of the second data transmission apparatus (1) based on the transmission data (TX), and outputting the transmission signal to an immediately downstream data transmission apparatus (1) (S21 and S50).

2. The data transmission method according to claim 1, wherein the first data transmission apparatus (1) transmits and receives the transmission signal in accordance with an instruction from an outside of its own physical layer (2), in a manner such that the reception data (BX) bypasses its own link layer (3).

3. The data transmission method according to claim 1, wherein the first data transmission apparatus (1) transmits and receives the transmission signal by maintaining its own link layer (3) in a reset state where a data process operation is suspended, so that the reception data (BX) bypasses the link layer (3) (S77).

4. The data transmission method according to claim 3, further comprising at the time of initialization (S16, S45, S75, S19, and S48) for allowing the plurality of data transmission apparatuses (1) in which both of the link layer (3) and the physical layer (2) are in the reset state (S12, S41, and S71) to perform transmission/reception of a transmission signal therebetween;
causing the link layer (3) and the physical layer (2) of the second data transmission apparatus (1) to exit the reset state (S15, S44, S18, and S47); and
causing only the physical layer (2) of the first data transmission apparatus (1) to exit the reset state (S74).

5. The data transmission method according to claim 1, wherein:
the transmission signal is generated in the physical layer (2) by mapping symbols of the transmission data to any of a plurality of signal levels; and
the reception data (BX and RX) are generated in the physical layer (2) based on evaluation levels for distinguishing and evaluating each signal level of the transmission signal.

6. The data transmission method according to claim 1, wherein the communication protocol is defined by MOST (Media Oriented Systems Transport).

7. A data transmission system having a plurality of data transmission apparatuses (1) interconnected with each other via transmission paths (11) in a ring configuration, the data transmission apparatuses (1) transmitting and receiving a transmission signal therebetween, wherein the data transmission apparatuses (1) each comprise:
a processing section (3) for processing transmission/reception data (RX and TX) according to a predetermined communication protocol; and
a transmitting/receiving section (2) for generating a transmission signal based on the transmission data (TX) processed in the processing section (3) and outputting the transmission signal to an immediately downstream data transmission apparatus (1), and for generating reception data (RX) based on a transmission signal outputted from an immediately upstream data transmission apparatus (1) and outputting the reception data to the processing section (3),
wherein:
a first data transmission apparatus (1) generates reception data (BX) in the transmitting/receiving section (2) based on a transmission signal outputted from an immediately upstream data transmission apparatus (1), generates a transmission signal based on the reception data (BX), and outputs the transmission signal to an immediately downstream data transmission apparatus (1) (S78), the first data transmission apparatus (1) being at least one of the plurality of data transmission apparatuses (1);
a second data transmission apparatus (1), which is the rest of the plurality of data transmission apparatuses (1) other than the first data transmission apparatus (1), generates reception data (RX) in the transmitting/receiving section (2) in response to a transmission signal outputted from an immediately upstream data transmission apparatus (1), and processes the reception data (RX) in the processing section (3) according to the communication protocol; and
the second data transmission apparatus (1) processes transmission data (TX) in the processing section (3) according to the communication protocol, generates a transmission signal in the transmitting/receiving section (2) based on the transmission data (TX), and outputs the transmission signal to an immediately downstream data transmission apparatus (1) (S21 and S50).

8. The data transmission system according to claim 7, wherein the transmitting/receiving section (2) comprises:
a bypass path for outputting the reception data (BX) by bypassing its own processing section (3); and
a selector (221) for selecting one of the transmission data (TX) and the reception data (BX) in accordance with an operating condition of the processing section (3) and outputting selected data to a transmitting end of the transmitting/receiving section (2), the transmission data (TX) outputted from the processing section (3) and the reception data (BX) outputted through the bypass path, wherein
the selector (221) of the first data transmission apparatus (1) selects the reception data (BX) outputted through the bypass path, in accordance with an instruction from an outside of its own transmitting/receiving section (2).

9. The data transmission system according to claim 7, wherein the transmitting/receiving section (2) comprises:
a bypass path for outputting the reception data (BX) by bypassing its own processing section (3); and
a selector (221) for selecting one of the transmission data (TX) and the reception data (BX) in accordance with an operating condition of the processing section (3) and outputting selected data to a transmitting end of the transmitting/receiving section (2), the transmission data (TX) being outputted from the processing section (3) and the reception data (BX) being outputted through the bypass path, wherein
the selector (221) of the first data transmission apparatus (1) selects the reception data (BX) outputted through the bypass path, when the processing section (3) of the first data transmission apparatus (1) is in a reset state where a data processing operation is suspended (S77).

10. The data transmission system according to claim 9, wherein the data transmission apparatuses (1) each further comprises a control section (4) for controlling operations of its own processing section (3) and its own transmitting/receiving section (2), wherein
the control section (4) of the first data transmission apparatus (1) controls the processing section (3) of the first data transmission apparatus so as to maintain its reset state (S77).

11. The data transmission system according to claim 10, further comprising transmission lines (12) for communicably interconnecting the control sections of the respective data transmission apparatuses (4), wherein
the control section (4) of the first data transmission apparatus (1) controls the processing section (3) of the first data transmission apparatus so as to maintain its reset state, in accordance with an instruction inputted through the transmission line (12) (S77).

12. The data transmission system according to claim 7, wherein the transmitting/receiving section (2) comprises:
a data mapping section (222) for generating the transmission signal by mapping symbols of the transmission data (TX) to any of a plurality of signal levels; and
an evaluation processing section (215) for generating the reception data (BX and RX) based on evaluation levels for distinguishing and evaluating each signal level of the transmission signal.

13. The data transmission system according to claim 7, wherein the communication protocol used in the processing section (3) is defined by MOST (Media Oriented Systems Transport).

14. A data transmission apparatus (1) interconnected with other data transmission apparatuses (1) via transmission paths (11) in aring configuration and performing transmission/reception of a transmission signal with the other data transmission apparatuses, the data transmission apparatus comprising:
a processing section (3) for processing transmission/reception data according to a predetermined communication protocol; and
a transmitting/receiving section (2) for generating a transmission signal based on transmission data (TX) processed in the processing section (3) and outputting the transmission signal to another data transmission apparatus (1), and for generating reception data (RX) based on a transmission signal outputted from another data transmission apparatus (1) and outputting the reception data to the processing section (3),
wherein:
in a first mode, the transmitting/receiving section (2) generates reception data (BX) based on a transmission signal outputted from another data transmission apparatus (1), generates a transmission signal based on the reception data (BX), and outputs the transmission signal to another data transmission apparatus (1) (S78);
in a second mode different from the first mode,
the transmitting/receiving section (2) generates reception data (RX) in response to a transmission signal outputted from another data transmission apparatus (1) and outputs the reception data (RX) to the processing section (3);
the processing section (3) processes the reception data (RX) outputted from the transmitting/receiving section (2), according to the communication protocol, and outputs to the transmitting/receiving section (2) transmission data (TX) processed according to the communication protocol; and
the transmitting/receiving section (2) generates a transmission signal based on the transmission data (TX) outputted from the processing section (3) and outputs the transmission signal to another data transmission apparatus (1) (S21 and S50).

15. The data transmission apparatus (1) according to claim 14, wherein the transmitting/receiving section (2) comprises:
a bypass path for outputting the reception data by bypassing the processing section (3); and
a selector (221) for selecting one of the transmission data (TX) and the reception data (BX) in accordance with an operating condition of the processing section (3) and outputting selected data to a transmitting end of the transmitting/receiving section (2), the transmission data (TX) outputted from the processing section (3) and the reception data (BX) outputted through the bypass path, wherein
the selector (221) selects the reception data (BX) outputted through the bypass path, in accordance with an instruction indicating the first mode and received from an outside of the transmitting/receiving section (2).

16. The data transmission apparatus (1) according to claim 14, wherein the transmitting/receiving section (2) comprises:
a bypass path for outputting the reception data by bypassing the processing section (3); and
a selector (221) for selecting one of the transmission data (TX) and the reception data (BX) in accordance with an operating condition of the processing section (3) and outputting selected data to a transmitting end of the transmitting/receiving section (2), the transmission data (TX) outputted from the processing section (3) and the reception data (BX) outputted through the bypass path, wherein
the selector (221) selects the reception data (BX) outputted through the bypass path, when, in the first mode, the processing section (3) is in a reset state where a data processing operation is suspended (S77).

17. The data transmission apparatus (1) according to claim 16, further comprising a control section (4) for controlling operations of the processing section (3) and the transmitting/receiving section (2), wherein
the control section (4) controls, in the first mode, the processing section (3) so as to maintain its reset state (S77).

18. The data transmission apparatus (1) according to claim 17, further comprising a transmission line (12) for communicably connecting the control section (4) to another data transmission apparatus (1), wherein
the control section (4) controls the processing section (3) so as to maintain its reset state, in accordance with an instruction indicating the first mode and inputted through the transmission line (12) (S77).

19. The data transmission apparatus (1) according to claim 14, wherein the transmitting/receiving section (2) comprises:
a data mapping section (222) for generating the transmission signal by mapping symbols of the transmission data (TX) to any of a plurality of signal levels; and
an evaluation processing section (215) for generating the reception data (BX and RX) based on evaluation levels for distinguishing and evaluating each signal level of the transmission signal.

20. The data transmission apparatus (1) according to claim 14, wherein the communication protocol used in the processing section (3) is defined by MOST (Media Oriented Systems Transport).
